# EUROPÄISCHE PATENTSCHRIFT

(11) **EP 3 332 039 B1**
(45) Veröffentlichungstag und Bekanntmachung des Hinweises auf die Patenterteilung: **29.09.2021**
(21) Anmeldenummer: 16767134.6
(22) Anmeldetag: 28.07.2016
(51) Int. Cl.: C21D 1/40, B21D 22/02, B21D 22/20, B62D 25/04, B62D 29/00, C21D 1/673

(54) **VORRICHTUNG UND VERFAHREN ZUM BEREICHSWEISEN ANLASSEN VON METALLBAUTEILEN**
DEVICE AND METHOD FOR TEMPERING SECTIONS OF METAL COMPONENTS
DISPOSITIF ET PROCÉDÉ POUR EFFECTUER UN TRAITEMENT DE REVENU LOCAL D'ÉLÉMENTS MÉTALLIQUES

(30) Priorität: 04.08.2015 DE 102015112812
(43) Veröffentlichungstag der Anmeldung: 13.06.2018
(73) Patentinhaber: Benteler Automobiltechnik GmbH, 33102 Paderborn (DE)
(72) Erfinder: KONRAD, Stefan, 33102 Paderborn (DE); SANDER, Max Wilhelm, 21279 Hollenstedt (DE); WULFES, Dieter, 33178 Borchen (DE); SCHNEIDER, Dimitri, 33758 Schloß Holte Stukenbrock (DE); WERNEKE, Simon, 33142 Büren (DE); HORN, Stefan, 34308 Bad Emstal (DE)
(74) Vertreter: Osterhoff, Utz
(86) Internationale Anmeldenummer: PCT/DE2016/100347
(87) Internationale Veröffentlichungsnummer: WO 2017/020888

(56) Entgegenhaltungen:
- EP-A1- 2 497 840
- EP-A1- 2 883 967
- EP-A1- 2 924 130
- WO-A1-2014/058567
- DE-A1-102005 018 974
- DE-A1-102009 016 027
- DE-C1- 10 212 820

## Beschreibung

Die Erfindung betrifft eine Vorrichtung sowie ein Verfahren zum bereichsweisen Anlassen von warmgeformten und/oder pressgehärteten Metallbauteilen mit den Merkmalen der Ansprüche 1 bzw. 9.

Im Automobilbau kommen in weiten Bereichen warmgeformte und/oder pressgehärtete Bauteile zum Einsatz. Durch den Einsatz von hochfesten oder ultrahochfesten Stählen ist es möglich, Bauteile mit hohen Festigkeiten bei gleichzeitig geringem Gewicht zu erzeugen, um angestrebte Leichtbaukonzepte zu verwirklichen.

Jedoch ist bei einer Vielzahl von Bauteilen die mitunter komplex geformt sein können, vorgesehen, dass die Materialeigenschaften bereichsweise variieren. So können in einem Bauteilbereich hohe Festigkeiten und geringe Duktilitäten vorgesehen sein, wo hingegen in anderen Bereichen des Bauteils diese Verhältnisse genau umgekehrt gelten sollen.

Diese maßgeschneiderten Eigenschaften können für sämtliche Bauteile eines Kraftfahrzeuges relevant werden, beispielsweise A-Säulen, B-Säulen, Lenker, Türaufprallleisten und dergleichen.

Nach einem Warmbehandlungs- und Presshärtevorgang, bei dem ein Stahlmaterial auf eine Temperatur größer als AC3 erwärmt wird, so dass sich in dem Material austenitisches Gefüge bildet, folgt ein Umformvorgang und ein Abschreckvorgang, der Martensitgefüge in dem umgeformten Bauteil erzeugt. Das Bauteil verfügt dann über homogene Materialeigenschaften, d. h. das gesamte Bauteil verfügt über eine gleichmäßig hohe Festigkeit und geringe Duktilität. Um in einen weiteren Wärmebehandlungsschritt die Duktilität bereichsweise zu erhöhen, ist es aus dem Stand der Technik bekannt, diese Bereiche nachträglich zu erwärmen und so eine erneute Gefügeumwandlung einzuleiten.

So offenbart die DE 10 2011 078 075 A1 eine Reihe von Verfahren, bei dem bereichsweise eine geringe Zugfestigkeit in einem geformten Bauteil erzeugt werden soll. Dabei wird ein Warmbehandlungs- und Presshärtungsvorgang an einem Ausgangsrohling vorgenommen, dass resultierende Erzeugnis hat im Wesentlichen gleichmäßige erste Zugfestigkeit. Durch das Vornehmen einer Warmbehandlungsnachbearbeitung an dem Erzeugnis wird erreicht, dass bereichsweise eine geringe zweite Zugfestigkeit in dem Bauteil eingestellt wird. Dabei wird unter anderem die Möglichkeit offenbart, das Erzeugnis bereichsweise unter Verwendung eines Konduktionserwärmens zu temperieren. Dabei wird das Erzeugnis zwischen erwärmten Platten positioniert und ein hydraulischer Zylinder in einem Werkzeug bringt die erwärmten Platten in Kontakt mit den zu erwärmenden Bereichen. Durch den Druck wird eine Wärmekonduktion von dem erwärmten Platten in die jeweiligen Bereiche des Erzeugnisses erreicht.

Diese Vorgehensweise ist insbesondere dann nachteilig, wenn an den erzeugten Metallbauteilen lediglich kleine Bereiche nachträglich erwärmt werden sollen. Dies ist beispielswiese dann der Fall, wann nachträglich noch Anbindungsstellen für andere Bauteile beispielsweise Scharniere oder ähnliches eingebracht werden sollen oder das Bauteil lokal noch gelocht oder beschnitten werden soll. Es ist dann vorteilhaft, wenn das Material dort eine geringere Festigkeit aufweist. Hierzu sind die in der DE 10 2011 078 075 A1 dargestellten Pressenvorrichtungen zu aufwendig und zu teuer und haben zusätzlich einen hohen Platzbedarf. Zudem sind sie für das Anlassen kleiner Bereiche nicht geeignet, da die auftretenden hohen Drucke einen starken Werkzeugverschleiß herbeiführen.

WO 2014 058567 A1 offenbart eine Vorrichtung zum bereichsweisen Anlassen von warmgeformten und pressgehärteten Metallbauteilen wie z.B. Sitze oder Teile davon, mit einem Traggestell und einem Werkzeug, wobei das Werkzeug zumindest ein aus einem elektrisch leitfähigen Material bestehendes Kontaktelement zum bereichsweisen Erwärmen eines Metallbauteils (Sitze) mittels eines Wärmeflusses aufweist.

Es ist die Aufgabe der vorliegenden Erfindung die Nachteile aus dem Stand der Technik zu eliminieren und eine Vorrichtung mit geringem Platzbedarf vorzuschlagen, durch die lokale Bereiche eines Metallbauteils nachträglich wärmebehandelt werden können und die zudem mobil einsetzbar ist. Gleichzeitig ist es die Aufgabe der Erfindung ein Verfahren zur Verfügung zu stellen, mit dem unaufwändig lokale Bereiche eines Metallbauteils wärmebehandelt werden können und das zudem einen geringen Werkzeugverschleiß verursacht.

Diese Aufgabe wird gelöst durch eine Vorrichtung mit den Merkmalen des Patentanspruchs 1. Besondere Ausgestaltungen der Erfindung sind Gegenstand der abhängigen Unteransprüche 2 bis 8.

Es handelt sich dabei um eine Vorrichtung zum bereichsweisen Anlassen von warmgeformten und/oder pressgehärten Metallbauteilen mit einem Traggestell und einem Arbeitskopf, wobei der Arbeitskopf zumindest ein aus einem elektrisch leitfähigen Material bestehendes Kontaktelement zum bereichsweisen Erwärmen eines Metallbauteils mittels eines Wärmeflusses aufweist, wobei Elektroden zum resistiven Heizen des Kontaktelements mit diesem sowie mit einer Stromquelle verbunden sind. Der Arbeitskopf ist relativ beweglich zu dem Tragegestell angeordnet.

Eine derartige Vorrichtung hat gegenüber den bekannten Pressanlagen den Vorteil der äußerst geringen Abmessungen und der unaufwändigen Konstruktion. Im einfachsten Falle ist es ausreichend, lediglich ein Kontaktelement aus einem elektrisch leitfähigen Material mit zwei Elektroden zu verbinden, die wiederrum über Kabel mit einer Stromquelle verbunden sind. Ein solches Kontaktelement kann dann beispielsweise mit Hilfe eines Manipulators gegen das wärmezubehandelnde bzw. anzulassende Bauteil gepresst werden. Dadurch dass das Kontaktelement lediglich resistiv geheizt wird, ist auch keine komplizierte Schaltungselektronik notwendig. Resistives Heizen bedeutet, dass das Kontaktelement durch die Widerstandswärme eines das Kontaktelement durchfließenden elektrischen Stroms, erwärmt wird. Im Prinzip erfolgt die Heizung durch simples Anschalten des Stroms. Das Kontaktelement kann dabei vor dem Anlassschritt gleichmäßig temperiert werden, was eine äußerst präzise Erwärmung des Metallbauteils genau in den Bereichen, in dem ein Anlassen stattfinden soll, ermöglicht.

Das Anlassen bedeutet erfindungsgemäß, dass ein warmgeformtes und/oder pressgehärtes Metallbauteil durch eine Wärmebehandlung lokal eine Gefügeumwandlung erfährt, so dass in diesem temperierten Bereich nach Abschluss der Wärmebehandlung ein anderes Gefüge als im restlichen Metallbauteil vorliegt, so dass dieser Bereich andere mechanische Eigenschaften aufweist als der Rest des Metallbauteils. Insbesondere bedeutet dies, dass in diesen Bereichen eine höhere Duktilität vorliegt bei gleichzeitig geringerer Festigkeit als in den übrigen Bereichen des Metallbauteils.

Die Anordnung des einen oder der mehreren Kontaktelemente an der Vorrichtung ist nahezu beliebig und ist nach praktischen Gesichtspunkten vorzunehmen. Beispielsweise können mehrere Bereiche des Bauteils durch unterschiedliche Kontaktelemente unabhängig voneinander angelassen werden. Es ist dabei auch möglich, für jedes Kontaktelement eine andere Temperierung vorzunehmen, so dass die Materialeigenschaften für jeden einzelnen Bereich des Metallbauteils unterschiedlich einstellbar sind.

Ebenso ist es möglich die Kontaktelemente nahezu beliebig zu formen. Es kann sich dabei um einfache rechteckige, runde, dreieckige oder vieleckige Kontaktelemente handeln. Es ist auch möglich, den Querschnitt der Kontaktelemente in Richtung des Stromflusses zu variieren, so dass lokal höhere Stromdichten auftreten können, was mit einer stärkeren Heizung des Kontaktelements einhergeht. So können innerhalb eines anzulassenden Bereiches nochmals lokal variierende Materialeigenschaften eingestellt werden.

Das zu bearbeitende Metallbauteil wird in der Praxis in einer Lehre eingespannt, um während des Anlassvorgangs auftretende Verzüge zu vermeiden und um die Metallbauteile wiederholbar gleichbleibend zu positionieren. Wenn dies erfolgt ist, kann der Arbeitskopf zu dem Metallbauteil bewegt werden und das Kontaktelement in Kontakt mit dem Metallbauteil gebracht werden.

Insbesondere ist vorgesehen, dass der Arbeitskopf linear aus einer Ruheposition in eine Aktivposition beweglich angeordnet ist. Dies ist bevorzugt mittels einer Schienenführung erreichbar, wodurch erneut das Grundprinzip einer einfachen und unaufwändigen Konstruktion umgesetzt wird.

Während des Einspannens des Metallbauteils in der Lehre ist folglich die Vorrichtung zum Anlassen nicht im Weg und befindet sich derweil in eine Ruheposition. In dieser Ruheposition kann beispielsweise die resistive Heizung des Kontaktelements erfolgen. Sobald das Metallbauteil in seine fixierte Lage gebracht worden ist, kann der Arbeitskopf in die Aktivposition bewegt und der Anlassvorgang durchgeführt werden.

Weiterhin hat eine bewegliche Anordnung des Arbeitskopfes den Vorteil, dass die gesamte Vorrichtung nicht auf- und abgebaut werden muss, wenn sie nicht zum Einsatz vorgesehen ist. Der Arbeitskopf kann dann in der Ruheposition verbleiben.

Dies ist beispielsweise dann der Fall, wenn wegen Kundenspezifikationen nicht alle Metallbauteile einer Serie einem bereichsweisen Anlassen unterworfen werden sollen.

Bevorzugt ist das zumindest eine Kontaktelement mit einem elektrisch isolierenden Material beschichtet. Dies bringt den Vorteil mit sich, dass das Kontaktelement während es in Kontakt mit dem Metallbauteil ist, weiter geheizt werden kann und nicht abkühlt. Dadurch kann eine konstante oder gesteuerte Temperierung des Kontaktelements sichergestellt werden. Ohne eine elektrisch isolierende Beschichtung wäre in diesem Falle das Kontaktelement mit dem Metallbauteil kurzgeschlossen und es bestünde die Gefahr, dass das Kontaktelement mit dem Metallbauteil verschweißt wird oder unerwünschte elektrische Ströme in dem Metallbauteil auftreten.

Davon unbenommen ist die Möglichkeit, eine resistive Heizung nur dann vorzunehmen, wenn das Kontaktelement nicht in Kontakt mit dem Metallbauteil ist. Eine weitere bevorzugte Ausführungsform der Erfindung sieht vor, dass an dem Arbeitskopf zumindest zwei Kontaktelemente relativ zueinander beweglich angeordnet sind, so dass das Metallelement zwischen den Kontaktelementen einklemmbar ist. Die Kontaktelemente sind dann beispielsweise bei einer Zange einander gegenüberliegend angeordnet und können sich relativ zueinander aufeinander zu oder voneinander wegbewegen. Bei einer solchen Schließbewegung klemmen sie das Metallelement zwischen sich ein. Eine solche Ausgestaltung einer erfindungsgemäßen Vorrichtung führt zum einen dazu, dass das Metallelement stabil in Kontakt mit den Kontaktelementen ist, da die beiden Kontaktelemente jeweils Gegenlager füreinander bilden.

Außerdem kann so in einem lokalen Bereich des Metallbauteils die doppelte Menge an Wärme eingebracht werden, wodurch insbesondere dicke Bleche schnell und zuverlässig erwärmt werden können. Bei einer Erwärmung von nur einer Blechseite besteht das Problem, dass bei zu dicken Blechen das Blech nicht vollständig durchwärmt wird. Durch eine Erwärmung von beiden Seiten des Bleches wird folglich eine gleichmäßigere Durchwärmung erreicht.

Bei Materialien mit hoher Wärmleitfähigkeit besteht die Gefahr, dass die Wärme aus dem Kontaktbereich zwischen dem Kontaktelement und dem Metallbauteil schnell in benachbarte Bereiche abfließt. Dies ist unerwünscht, da dann auch die benachbarten Bereiche eine Gefügeänderung erfahren, die schwer steuerbar ist. Es ist häufig erwünscht, dass die geänderten Materialeigenschaften in genau definierten Bereichen auch ohne Übergangsbereiche auftreten. Dann ist es wichtig, die Wärme möglichst schnell in das Bauteil einzubringen, so dass ein Abfließen vor Beendigung der Gefügeumwandlung weitgehend vermieden wird. Wird das Metallbauteil aber zwischen zwei Kontaktelementen eingeklemmt, so wird in der gleichen Zeit die doppelte Menge an Wärme eingebracht, so dass das Blech sehr schnell gleichmäßig durchwärmt werden kann. Dies ist also ebenfalls der Präzision des Anlassvorgangs zuträglich.

Eine weitere Ausführungsform der Erfindung sieht vor, dass an dem Arbeitskopf zumindest ein Kontaktelement und ein thermisch und/oder elektrisch isolierendes Element relativ zueinander beweglich angeordnet sind, so dass das Metallbauteil zwischen dem Kontaktelement und dem isolierenden Element einklemmbar ist. Hier handelt es sich gewissermaßen um die konträre Variante der zuvor beschriebenen Ausführungsform. Diese Ausgestaltungsform ist vorteilhaft, wenn das Metallbauteil im anzulassenden Bereich gerade nicht vollständig oder nur ein dünnes Blech durchwärmt werden soll. Hier wirkt das thermisch und/oder elektrisch isolierende Element insbesondere als Gegenlager und ist bevorzugt aus keramischen Werkstoffen mit geringer Wärmeleitfähigkeit ausgebildet.

Weiterhin ist vorgesehen, dass das Kontaktelement der erfindungsgemäßen Vorrichtung abgewinkelte Bereiche aufweist, an denen die Elektroden befestigt sind. Die Elektroden bestehen wegen der guten elektrischen Leitfähigkeit zumeist aus Kupfer. Die Anbindungen der Kupferelektroden an das Kontaktelement sind gekühlt um schädliche Materialbelastungen zu vermeiden. Das hat zur Folge, dass die Anbindungsbereiche des Kontaktelementes an die Elektroden eine Temperatur von etwa 30 °C aufweisen. Die eigentliche Kontaktfläche des Kontaktelements, die mit dem Metallbauteil in Kontakt kommt, weist aber eine viel höhere Temperatur auf. Hier sind Temperaturen von 1000 °C und darüber möglich. Dies führt dazu, dass sich zwischen den Bereich der Anbindungen an den Kupferelektroden und der Kontaktfläche eine Übergangszone bildet, in der die Temperatur von 30 °C graduell auf mehr als 1000 °C ansteigt. Daher werden die Bereiche, in denen die Elektroden an dem Kontaktelement befestigt sind und in denen sich die Übergangszone befindet, abgewinkelt, so dass nur die Kontaktfläche des Kontaktelements, die die notwendige Zieltemperatur aufweist, mit dem Metallbauteil in Kontakt kommen kann. Dadurch wird vermieden, dass es zu einem zufälligen Kontakt zwischen dem Übergangsbereich und dem Metallbauteil kommt. Durch die in dem Übergangsbereich herrschenden niedrigeren Temperaturen hätte dies zur Folge, dass auch dem anzulassenden Bereich des Metallbauteils benachbarte Bereiche eine Gefügeänderung erfahren, die graduell vom anzulassenden Bereich unterschiedliche Materialeigenschaften mit sich bringt.

Des Weiteren sind dadurch die Befestigungsstellen zwischen den Elektroden und dem Kontaktelement beabstandet zu dem Metallbauteil, so dass die Befestigungsstellen bei dem Anlassvorgang nicht ungewollt gegen das Metallbauteil gepresst werden und in der Folge erhöhtem Verschleiß unterliegen.

Zudem wird durch das Abwinkeln der Anbindungsbereiche für die Kupferelektroden eine bessere Zugänglichkeit dieser Anbindungsstellen ermöglicht, so dass eine Wartung leichter möglich ist.

Weiterhin ist in einer besonderen Ausführungsform der Erfindung vorgesehen, dass das Kontaktelement als dem Metallbauteil konturnahes Blech ausgebildet ist, so dass eine Kontaktfläche des Kontaktelements und der zu erwärmende Bereich des Metallbauteils in vollflächigen Kontakt bringbar sind. Dies ist insbesondere dann vorteilhaft, wenn die Bauteile eine sehr komplexe Topologie und starke Umformgrade aufweisen. Hierbei kann ein als Kontaktelement vorgesehenes Metallblech gleichartig zu dem Metallbauteil umgeformt werden, so dass ein vollflächiger Kontakt zwischen Kontaktelement und Metallbauteil in dem anzulassenden Bereich möglich ist. Dadurch wird eine präzise Temperierung des anzulassenden Bereichs des Metallbauteils ermöglicht, ohne dass benachbarte Bereiche ebenfalls durch eine ungewollte Gefügeumwandlung beeinträchtigt werden. Dies ist bei einem partiellen Anlassen mit Hilfe größerer Pressen nur mit großem Aufwand möglich.

Weiterhin ist in einer besonderen Ausführungsform vorgesehen, dass das Kontaktelement aus einem rostfreien austenitischen oder rostfreien ferritischen Stahl ausgebildet ist. Insbesondere handelt es sich dabei um einen Edelstahl, beispielsweise einen Edelstahl mit der Materialnummer 1.4841. Die genaue Materialwahl ist allerdings davon abhängig, in welchem Temperaturbereichen beim Anlassen und beim Temperieren des Kontaktelementes gearbeitet wird. Dass zum Einsatz kommende Material muss ausreichend druckbeständig sein, da das Kontaktelement mit einem Anpressdruck zwischen 10 kPa und 10 MPa mit dem Metallbauteil in Kontakt gebracht wird. Eine entsprechende Druckbeständigkeit muss auch bei den vorgesehenen Arbeitstemperaturen bis über 1000 °C vorliegen. Beispielsweise ist das vorstehend benannte exemplarische Material Edelstahl 1.4841 bei 1000 °C bis 5 MPa druckbeständig.

Eine erfindungsgemäße Vorrichtung kann beispielsweise taktgekoppelt in einer Warmformlinie eingesetzt werden. Eine dort vorliegende Anlassstation würde aus einer erfindungsgemäßen Vorrichtung zum Anlassen von warmgeformten und/oder pressgehärteten Metallbauteilen bestehen, sowie einer Lehre in die die Metallbauteile eingespannt werden, sowie einem oder mehreren Manipulatoren oder Robotern, die die Metallbauteile in die Anlassstation einlegen bzw. sie wieder daraus entnehmen.

Es können auch mehrere erfindungsgemäße Vorrichtungen in einer Anlassstation eingesetzt werden, wenn mehrere Bereiche eines Metallbauteiles angelassen werden sollen.

Gleichzeitig ist es auch möglich, dass das Anlassen der warmgeformten und/oder pressgehärteten Metallbauteile an einem anderen Ort als das eigentliche Formen der Metallbauteile stattfindet. Es ist ein großer Vorteil der vorgestellten Erfindung, dass die Vorrichtung aufgrund ihrer unaufwändigen Konstruktion schnell, variabel und mobil eingesetzt werden kann. Eine Integration in eine bestehende Warmformlinie ist auch wegen des geringen Platzbedarfs und der einfachen Konstruktion ohne Probleme möglich.

Der verfahrensmäßige Teil der Aufgabe wird gelöst durch ein Verfahren zum bereichsweisen Anlassen von warmgeformten und/oder pressgehärteten Metallbauteilen gemäß den Merkmalen des Anspruchs 9. Besondere Ausgestaltungen der Erfindung sind Gegenstand der Unteransprüche 10 bis 15.

Hierbei wird zunächst ein warmgeformtes und/oder pressgehärtes Bauteil bereitgestellt. Es wird zumindest ein an einem Arbeitskopf angebrachtes Kontaktelement auf eine Temperatur erwärmt, die größer ist als eine Zieltemperatur, auf die ein Bereich des Metallbauteils erwärmt werden soll. Danach wird eine Kontaktfläche des Kontaktelements mit einem vorbestimmten Anpressdruck mit dem zu erwärmenden Abschnitt des Metallbauteils vollflächig in Anlage gebracht, wodurch das Metallbauteil bereichsweise mittels eines Wärmeflusses auf eine Zieltemperatur erwärmt wird. Das Kontaktelement wird mittels resistiver Heizung erwärmt. Der Arbeitskopf wird zum in Kontakt bringen des Kontaktelements mit dem Metallbauteil aus einer Ruheposition in eine Aktivposition bewegt.

Das Bereitstellen eines warmgeformten und/oder pressgehärten Bauteils kann mittels üblicher Warmformwerkzeuge bzw. Warmformlinien geschehen. Üblicherweise wird ein Metallrohling, beispielsweise eine Platine oder auch eine zugeschnittene Platine auf eine Temperatur jenseits der AC3-Temperatur des zu verarbeitenden Materials erwärmt. Diese Temperaturen variieren von Werkstoff zu Werkstoff. Üblich sind hier Temperaturen von größer als 850 °C, insbesondere größer als 900 °C. Diese Erwärmung führt dazu, dass das Gefüge in dem Metallrohling in Austenit umgewandelt wird. Sodann wird der Metallrohling in einem Umformwerkzeug umgeformt und äußerst rapide abgekühlt, so dass sich das gesamte Material in martensitisches Gefüge umwandelt. Dieses so hergestellte Metallbauteil wird daraufhin dem Anlassvorgang zugeführt. Im Normalfall ist das Metallbauteil zu diesem Zeitpunkt auf Raumtemperatur abgekühlt. Höhere Temperaturen sind allerdings möglich, insofern die Martensitfinishtemperatur von etwa 250 °C unterschritten wird.

An einem Arbeitskopf ist ein Kontaktelement angebracht, wobei der Arbeitskopf selbst wieder an einem Traggestell angebracht ist. Das Kontaktelement wird resistiv erwärmt, wobei hier die Erwärmung mittels eines Stromflusses erfolgt, der wegen des elektrischen Widerstandes des Kontaktelementes eine Widerstandswärme in dem Kontaktelement erzeugt. Dieses Erwärmen erfolgt in einem Zeitraum zwischen 30 Sekunden und 15 Minuten, bevorzugt kleiner als 1 Minute. Die Temperatur, auf die das Kontaktelement erwärmt wird, ist größer als die Zieltemperatur auf die ein Bereich des Metallbauteils erwärmt werden soll. Die Zieltemperaturen für einen Anlassvorgang liegen, ebenfalls wieder abhängig von den einzustellenden Materialeigenschaften und dem Werkstoff, bevorzugt zwischen 350 °C etc. und 850°C, besonders bevorzugt wird hier eine Temperatur zwischen 750°C und 790 °C angestrebt. Das bedeutet, dass die Temperatur, auf die das Kontaktelement erwärmt werden muss, größer als 850°C sein muss, in bevorzugter Weise beträgt die Temperatur 850 °C bis 1050 °C. Das Metallbauteil wird in eine Lehre eingespannt, um es zum einen während des Anlassvorgangs in Position zu halten und zum anderen um mögliche durch die Erwärmung auftretende Verzüge zu vermeiden.

Durch das Bewegen des Arbeitskopfes aus einer Ruheposition in eine Aktivposition treten wieder die bereits oben im Rahmen der Vorrichtung beschriebenen Vorteile auf, da es für das Handling des Metallbauteils der Arbeitskopf der Vorrichtung aus dem Handlingbereich des Metallbauteils entfernt wird bzw. für den Fall, dass ein Anlassen nicht vorgesehen ist, die Vorrichtung in einer Ruheposition verharrt und keinen unnötigen Platzbedarf benötigt.

Es ist vorgesehen, dass der Arbeitskopf auf das in einer Lehre eingeklemmte Metallbauteil zufährt und in Folge das Kontaktelement mit dem Metallbauteil in Anlage gebracht wird. Dabei kann lediglich eine lineare Bewegung des Arbeitskopfes vorliegen, beispielsweise auf einer Schiene. Oder der Arbeitskopf kann rotieren oder an einem Gelenk gekippt werden oder dergleichen. Oder alle diese Bewegungen können überlagernd sein.

Die erwärmte Kontaktfläche des Kontaktelements kommt dann mit dem zu erwärmenden Bereich des Metallbauteils vollflächig in Anlage, wodurch der kontaktierte, anzulassenden Bereich des Metallbauteils durch Wärmeleitungen von dem Kontaktelement in das Metallbauteil erwärmt wird.

Das vorgestellte Verfahren ermöglicht es, die anzulassenden Bereiche äußerst präzise und scharf begrenzt zu temperieren. Durch das resistive Heizen ist auch die Temperatursteuerung zudem sehr genau vorsehbar.

Eine vorteilhafte Ausgestaltung des Verfahrens sieht vor, dass das Kontaktelement während des Kontakts mit dem Metallbauteil nicht erwärmt wird.

Das bedeutet, dass das Kontaktelement zunächst erwärmt wird und vor dem vollflächigen in Kontakt bringen mit dem Metallbauteil die resistive Heizung abgeschalten wird. Dadurch wird vermieden, dass durch einen Kurzschluss zwischen dem Kontaktelement und dem Metallbauteil die beiden Gegenstände miteinander verschweißt werden und es wird zudem ein unerwünschter Stromfluss durch das Metallbauteil, der mit einer unkontrollierten Erwärmung des Metallbauteils einhergeht, vermieden.

In einer weiteren bevorzugten Ausführungsform ist für das Verfahren vorgesehen, dass der Anpressdruck zwischen 100 KPa und 10 MPa, bevorzugt zwischen 100 KPa und 1 MPa liegt. Die hier aufgewendeten Anpressdrücke sind im Gegensatz zu handelsüblichen Werkzeugpressen äußerst gering. Es hat sich herausgestellt, dass mittels des erfindungsgemäßen Verfahrens auch bei diesen relativ kleinen Drücken eine ausreichend gleichmäßige Temperierung der anzulassenden Bereiche möglich ist. Selbst bei 100 kPa bis 200 kPa ist eine ausreichend gleichmäßige Temperierung möglich. Diese äußerst geringen Anpressdrücke führen dazu, dass der Verschleiß des Werkzeugs durch die wärmebedingte Ausdehnung der Metallbauteile schwächer ausgeprägt ist, als dies bei höheren Anpressdrücken der Fall wäre. Es ist also ein besonderer Vorteil des erfindungsgemäßen Verfahrens sowie auch der Vorrichtung, dass hier geringe Anpressdrücke eingesetzt werden können, wodurch die Vorrichtung weniger wartungsintensiv wird.

Eine weitere Ausführungsform des Verfahrens sieht vor, dass das Metallbauteil zwischen zwei an dem Arbeitskopf relativ zueinander beweglich angeordneten Kontaktelementen eingeklemmt wird.

Wie bereits vorstehend im Rahmen der Erläuterungen zur erfindungsgemäßen Vorrichtung beschrieben, führt das Einklemmen des Metallbauteils zwischen zwei relativ zueinander beweglich angeordneten Kontaktelementen zu einer schnelleren und gründlicheren Durchwärmung des Metallbauteils. Das Metallbauteil ist dann beispielsweise wie in einer Zange zwischen den beiden Kontaktelementen eingeklemmt. Die Kontaktelemente sind dann so an dem Arbeitskopf angeordnet, dass sie sich in einer Schließbewegung aufeinander zubewegen bzw. sich in einer Öffnungsbewegung wieder voneinander wegbewegen. Als weiterer Vorteil ergibt sich, dass bei dem Verfahren mit diesem Merkmal das Metallbauteil sich nicht mehr relativ zu den Kontaktelementen bewegen kann, beispielsweise durch auftretenden Verzug, so dass eine äußerst präzise Anlassbehandlung möglich ist.

Weiterhin ist an einer besonderen Ausgestaltung des Verfahrens vorgesehen, dass das Kontaktelement für eine vorbestimmte Anpresszeit mit dem Metallbauteil in Kontakt kommt. Die Anpresszeit beträgt insbesondere zwischen 2 Sekunden und 30 Sekunden, bevorzugt zwischen 3 Sekunden und 15 Sekunden. Mithilfe der Anpresszeit lässt sich ebenfalls die Wärmeinbringung in das Metallbauteil steuern, da mit längerer Anpresszeit eine größere Wärmemenge in das Metallbauteil eingebracht wird. Es ist hier allerdings auch darauf zu achten, dass die Anpresszeit nicht zu groß gewählt wird, da mit steigender Anpresszeit die Gefahr ansteigt, dass die eingebrachte Wärme unkontrolliert in benachbarte Bereiche des Metallbauteils abfließt.

Besonders bevorzugt ist vorgesehen, dass das Kontaktelement mit oder nach dem Erreichen der Aktivposition mit dem zu erwärmenden Abschnitt des Metallbauteils vollflächig in Anlage kommt.

Hierbei kann sich das Kontaktelement separat zum Arbeitskopf bewegen, wie bespielsweise vorstehend beschrieben, zum Einklemmen des Metallbauteils. Es kann aber auch vorgesehen sein, dass direkt durch die Bewegung des Arbeitskopfes das Kontaktelement mit dem Metallbauteil in Kontakt kommt.

So kann beispielsweise die Schließbewegung beim Einklemmen des Metallbauteils bereits kurzfristig vor dem Erreichen der Aktivposition eingeleitet werden und mit Erreichen der Aktivposition das Einklemmen des Metallbauteils zwischen den Kontaktelementen vollzogen werden. Insbesondere wenn die erfindungsgemäße Vorrichtung bzw. das erfindungsgemäße Verfahren taktgekoppelt im Rahmen einer Warmformlinie eingesetzt werden, kann diese überlagernde Bewegung zwischen dem Bewegen des Arbeitskopfes von der Ruheposition in die Aktivposition und dem in Anlagebringen des Kontaktelements mit dem Metallbauteil hilfreich sein, um die notwendigen Taktzeiten zu erreichen.

Davon unberührt ist es selbstverständlich im Rahmen der Erfindung auch möglich, dass diese beiden Bewegungen auch nacheinander durchgeführt werden. Das bedeutet, dass der Arbeitskopf zunächst von der Ruheposition in die Aktivposition gebracht wird und sodann das Bewegen des Kontaktelements, beispielsweise zum Einklemmen des Metallbauteils zwischen zwei Kontaktelementen, durchgeführt wird.

Insbesondere ist es vorgesehen, dass das Verfahren mithilfe einer Vorrichtung wie sie obenstehend beschrieben wurde, durchgeführt wird.

Die nachfolgenden Zeichnungen verdeutlichen die Erfindung. Es zeigen:
- Figur 1: eine erste Ausführungsform einer erfindungsgemäßen Vorrichtung,
- Figur 2: eine zweite Ausführungsform einer erfindungsgemäßen Vorrichtung in einer Seitenansicht,
- Figur 3: die zweite Ausführungsform einer erfindungsgemäßen Vorrichtung in einer perspektivischen Ansicht,
- Figur 4: ein Kontaktelement,
- Figur 5: eine Warmformlinie mit einer Anlassstation.

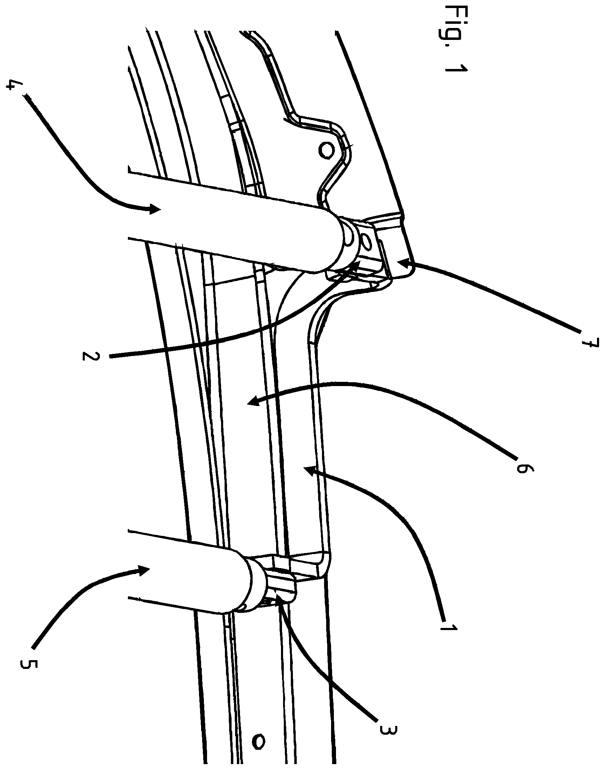

Die in Figur 1 dargestellte Vorrichtung zum bereichsweisen Anlassen von warmgeformten und/oder pressgehärten Metallbauteilen weist ein Kontaktelement 1 auf, das mit zwei Elektroden 2, 3 verbunden ist. Jede der Elektroden 2, 3 ist wiederrum über ein Kabel 4, 5 mit einer nicht näher dargestellten Stromquelle verbunden. Das Traggestell und der Rest des Arbeitskopfes sind hier nicht näher dargestellt. Das Kontaktelement 1 ist mit einem Metallbauteil 6 bereichsweise in vollflächigen Kontakt. In diesem Beispiel weist das Metallbauteil 6 einen Flansch 7 auf, der bereichsweise angelassen werden soll. In den angelassenen Bereichen des Flansches 7 wird die Festigkeit des Materials heruntergesetzt, um später in diesen Bereich Ausnehmungen als Anbindungsstellen für andere Bauteile ausstanzen zu können.

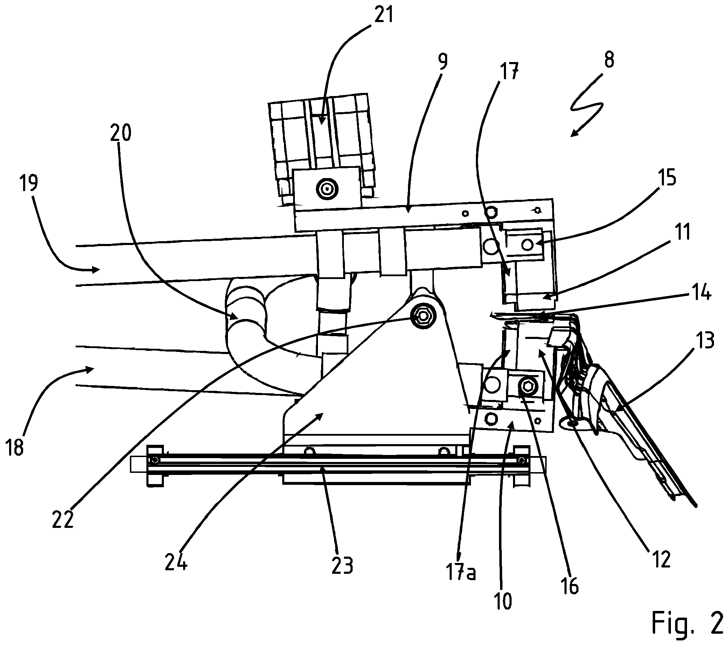

In Figur 2 ist eine weitere Ausführungsform einer erfindungsgemäßen Vorrichtung dargestellt. Nicht dargestellt ist auch hier wieder ein Traggestell. Bei dem Traggestell kann es sich entweder um eine feste Metallkonstruktion handeln. Es ist aber auch möglich, dass es sich bei dem Traggestell um einen Manipulator oder Roboter handelt. In Figur 2 zu sehen ist ein Arbeitskopf 8. Der Arbeitskopf 8 umfasst ein erstes Halterungsteil 9 und ein zweites Halterungsteil 10. An dem ersten Halterungsteil 9 ist ein erstes Kontaktelement 11 angebracht. Demgegenüber ist an dem zweiten Halterungsteil 10, ein zweites Kontaktelement 12 angebracht. Zwischen den beiden Kontaktelementen 11, 12 ist ein Metallbauteil 13 erkennbar, dessen Flanschbereich 14, zwischen den beiden Kontaktelementen 11, 12 angeordnet ist. Das Metallbauteil 13 soll dann mit den Kontaktflächen 26, 31 der Kontaktelementen 11, 12 vollflächig in Anlage kommen. Die beiden Kontaktelemente 11, 12 sind relativ beweglich zueinander geordnet und zwar derart, dass der Flanschbereich 14 des Metallbauteils 13 zwischen den beiden Kontaktelementen 11, 12 einklemmbar ist. Die Kontaktelemente 11, 12 bestehen aus einem elektrisch leitfähigen Material, bevorzugt einem Edelstahl. Die Kontaktelemente 11, 12 werden resistiv geheizt, wozu Elektroden 15, 16 an den Kontaktelementen 11, 12 angebracht sind. Damit gewährleistet ist, dass der Stromfluss ausschließlich durch die Kontaktelemente 11, 12 erfolgt, sind Isolationselemente 17, 17a vorgesehen, durch die die Kontaktelemente 11, 12 beabstandet zu den Halterungsteilen 9, 10 gehalten werden. Die Elektroden sind über Kabel 18, 19, 20 mit einer Stromquelle verbunden.

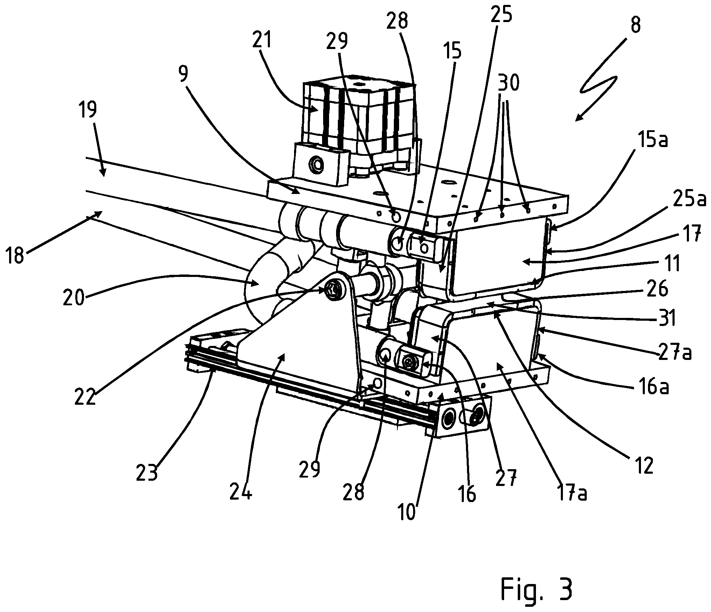

In dem hier dargestellten Ausführungsbeispiel sind die Kabel so angeordnet, dass die Kontaktelemente 11, 12 in einer Reihenschaltung angeordnet sind, d. h. dass der Stromfluss von der Stromquelle weg über das Kabel 19 in eine erste Elektrode 15 des ersten Kontaktelements 11 geleitet wird. Die auf der gegenüberliegenden Seite liegende zweite Elektrode 15a siehe Figur 3, ist verbunden mit der Elektrode 16 auf der Vorderseite des zweiten Kontaktelementes 12 über das Kabel 20. Die nicht dargestellte zweite Elektrode 16a des zweiten Kontaktelements 12 auf der gegenüberliegenden Seite wiederrum ist mit dem Kabel 18 gekoppelt, das wiederrum zur Stromquelle führt. Durch diese Reihenschaltung der Kontaktelemente 11, 12 wird der Konstruktionsaufwand geringgehalten und ein denkbar kleiner Bauraum nur beansprucht.

Die beiden Kontaktelemente 11, 12 sind zueinander relativbeweglich und können aufeinander zu oder voneinander wegbewegt werden. Dies wird erreicht durch ein Antriebselement 21, beispielsweise einem Pneumatikzylinder, der die beiden Kontaktelemente 11, 12 über eine entsprechende Bewegungsvorrichtung bewegt, wobei die Bewegung der Kontaktelemente 11, 12 durch die Drehachse 22 unterstützt wird.

Der Arbeitskopf 8 ist zudem relativbeweglich zu dem nicht dargestellten Traggestell angeordnet. Dies wird in diesem Ausführungsbeispiel über eine Schiene 23 ermöglicht. An dem Arbeitskopf 8 angebracht ist ein Schlitten 24, der sich auf der Schiene 23 linear bewegen kann. Diese Ausgestaltung ermöglicht eines präzises und wiederhol genaues Führen des Arbeitskopfes 8 aus einer Ruheposition in eine Aktivposition.

Dieselbe Ausführung der erfindungsgemäßen Vorrichtung ist in Figur 3 in einer perspektivischen Darstellung illustriert. In dieser Abbildung wird noch einmal deutlich, dass die Kontaktelemente 11, 12 jeweils abgewinkelte Bereiche 25, 25a, 27, 27a aufweisen. An diesen abgewinkelten Bereichen sind die Kontaktelemente 11, 12 mit den Elektroden 15, 15a, 16, 16a verbunden.

Auch die Reihenschaltung der Kontaktelemente über die Kabel 18, 19, 20 wird hier noch einmal etwas deutlicher ersichtlich.

Die Kabel 18, 19, 20 verfügen in ihrem äußeren Mantel über eine Wasserkühlung. Unmittelbar benachbart zu den Elektroden 16, 16a, 15, 15a befinden sich mit den Kabeln 18, 19, 20 jeweils Kühlbohrungen 28. Die Kühlbohrungen 28 sind mit korrespondieren Kühlbohrungen 29 in den Halterungsteilen 9, 10 verbunden. Das Kühlwasser wird also beispielsweise aus dem Kabel 20 herausgeführt und in das zweite Halterungsteil 10 über nicht näher dargestellte Schläuche geleitet. Dadurch wird das zweite Halterungsteil 10 benachbart zum zweiten Kontaktelement 12 gekühlt. Das bedeutet, dass eine thermische Abschirmung über das Kühlwasser erreicht wird, so dass die Abwärme der Kontaktelemente 11, 12 nicht die Halterungsteile 9, 10 und damit den ganzen Arbeitskopf 8 aufheizen. Auf der gegenüberliegenden Seite des zweiten Halterungsteils 10 führt eine entsprechende Kühlbohrung 29 das Kühlwasser wieder heraus und eine Kühlbohrung 28 führt das Kühlwasser in das Kabel 18 hinein, so dass auch hier über die gesamte Kabelführung ein geschlossener Wasserkreislauf vorliegt.

Des Weiteren sind in Figur 2 und Figur 3 Schraubbohrungen 30 erkennbar. Hier sind Umhausungselemente anbringbar, die hier der Übersichtlichkeit halber ebenfalls nicht dargestellt sind. Üblicherweise besteht auch die Umhausung aus einem Edelstahl. Die Umhausung hat zum einen den Zweck die Sicherheit des Anlagenbedieners zu gewährleisten, zum anderen dient sie aber auch als thermisches Schild, das verhindert, dass die entstehende Wärme nach außen abgestrahlt wird. Als zusätzlichen Vorteil bringt die Umhausung mit sich, dass die Isolationselemente 17, 17a, die zumeist aus Keramiken bestehen und im Laufe ihres Lebens brüchig werden, nicht ohne weiteres zerfallen können, da sie durch die Umhausung an Ort und Stelle gehalten werden. Dadurch wird vorteilhaft wiederrum die äußerst wartungsarm konzipierte Vorrichtung.

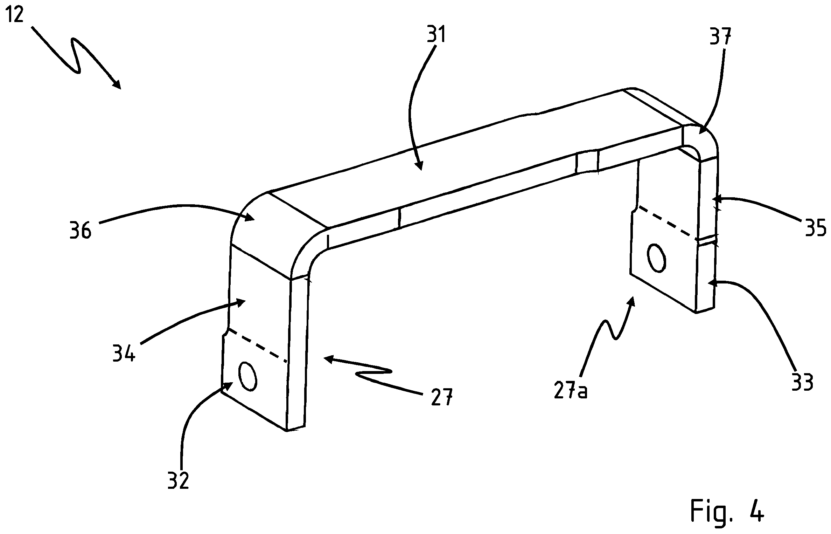

Figur 4 zeigt noch einmal das erste Kontaktelement 12 für sich alleine stehend. Deutlich sind hier die abgewinkelten Bereiche 27, 27a zu erkennen. Diese bestehen aus einem Verbindungsabschnitt 32, 33 und einem Übergangsbereich 34, 35. An den Verbindungsabschnitten 32, 33 ist das Kontaktelement 12 mit den jeweils zugeordneten Elektroden 16, 16a (hier nicht dargestellt) verbunden. In diesem Bereich herrscht durch die Wasserkühlung eine Temperatur von etwa 30 °C. Im Bereich der Kontaktfläche 31, die später mit dem Metallbauteil 13 in vollflächigem Kontakt tritt, beträgt die Temperatur des Kontaktelements 12 aber bis zu 1000 °C und darüber. Dementsprechend bildet sich ein Übergangsbereich 34, 35 aus, wo die Temperatur von 30 °C graduell bis auf 1000 °C ansteigt. Dadurch dass die Übergangsbereiche 34, 35 von der Kontaktfläche 31 weg abgebogen sind, wird gewährleistet, dass ausschließlich die gleichmäßig temperierte Kontaktfläche 31 mit dem Metallbauteil 13 in Kontakt kommt. Kritisch sind hier die Radiusbereiche 36, 37. An diesen Stellen kommt es zu verstärkter Wärmeabstrahlung, so dass hier kein scharf begrenzter Übergang zwischen temperiertem und nicht temperiertem Bereich des Metallbauteils 13 möglich ist.

Dieser Aspekt kann gegebenenfalls dazu genutzt werden einen graduellen Übergang zwischen temperiertem und nicht temperiertem Bereich zu schaffen, wenn dies für das jeweilige Metallbauteil 13 vorgesehen ist. Dann können die Radien in den Radiusbereichen 36, 37 so gestaltet werden, dass der Wärmeübertrag an die einzustellenden Materialeigenschaften des Metallbauteils 13 angepasst ist. Ist jedoch ein scharfer Übergang zwischen temperierten und nicht temperierten Bereichen des Metallbauteils 13 gefordert, sind die Radien in den Radiusbereichen 36, 37 möglichst klein zu wählen. Es ist auch möglich, um einen solchen scharfen Übergang zu erreichen, die abgewinkelten Bereiche 27, 27a, nicht mit Hilfe eines Biegevorgangs in dem Kontaktelement 12 herzustellen, sondern die abgewinkelten Bereiche 27, 27a als separate Bauteile herzustellen und an die ebenfalls separat hergestellte Kontaktfläche 31 anzuschweißen. Notwendig ist dies insbesondere, wenn äußerst kleine Radien vorgesehen sind. Denn die hier möglichen Biegeradien sind immer abhängig von der jeweiligen Materialdicke, also der Blechdicke des Bleches aus dem das Kontaktelement 12 besteht.

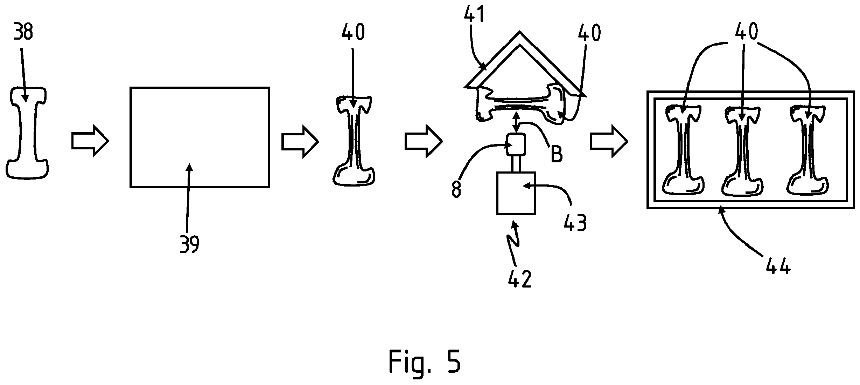

In Figur 5 ist skizzenhaft ein möglicher Aufbau einer Warmformlinie gezeigt, in der eine Anlassstation mit einer erfindungsgemäßen Anlassvorrichtung 42 vorgesehen ist. Hier werden Platinen 38 in einer Umformstation 39 umgeformt und pressgehärtet. Die dabei entstandenen umgeformten Platinen 40 werden in eine andere Station überbracht. Dort werden die umgeformten Platinen 40 in eine Lehre 41 eingespannt und einem Anlassvorgang unterzogen. Dazu ist in der Anlassstation eine Anlassvorrichtung 42 vorgesehen, mit einem Traggestell 43 und einem Arbeitskopf 8. Der Arbeitskopf 8 ist linear beweglich in einer Bewegungsrichtung B auf die umgeformte Platine 40 zu bzw. von der umgeformten Platine 40 weg. Die umgeformte Platine 40 wird dann bereichsweise angelassen, d. h. die Materialeigenschaften werden lokal eingestellt und so dann der Lehre 41 wieder entnommen und in einem Lagergestell 44 abgelegt und danach der weiteren Verwendung zugeführt.

Die hier in der Warmformlinie vorgesehene Anlassvorrichtung 42 weist an dem Arbeitskopf 8 aus einem elektrisch leitfähigen Material bestehendes Kontaktelement auf zum bereichsweisen Erwärmen der ungeformten Platine 40 mittels eines Wärmeflusses, wobei zwei Elektroden zum resistiven Heizen des Kontaktelements mit dem Kontaktelement selbst sowie einer Stromquelle verbunden sind.

Das elektrisch leitfähige Kontaktelement, das an dem Arbeitskopf 8 angebracht ist, wird auf eine Temperatur erwärmt, die größer ist als eine Zieltemperatur, auf die ein Bereich der umgeformten Platine 40 erwärmt werden soll. Danach wird eine Kontaktfläche des Kontaktelements mit einem vorbestimmten Anpressdruck mit dem zu erwärmenden Bereich des Metallbauteils vollflächig in Anlage gebracht, wodurch die ungeformte Platine 40 bereichsweise auf eine Zieltemperatur erwärmt wird.

### Bezugszeichen:

- 1: Kontaktelement
- 2: Elektrode
- 3: Elektrode
- 4: Kabel
- 5: Kabel
- 6: Metallbauteil
- 7: Flansch
- 8: Arbeitskopf
- 9: erstes Halterungsteil
- 10: zweites Halterungsteil
- 11: erstes Kontaktelement
- 12: zweites Kontaktelement
- 13: Metallbauteil
- 14: Flanschbereich
- 15: erste Elektrode zu 11
- 15a: zweite Elektrode zu 11
- 16: erste Elektrode zu 12
- 16a: zweite Elektrode zu 12
- 17: Isolationselement
- 17a: Isolationselement
- 18: Kabel
- 19: Kabel
- 20: Kabel
- 21: Antriebselement
- 22: Drehachse
- 23: Schiene
- 24: Schlitten
- 25: abgewinkelter Bereich von 11
- 25a: abgewinkelter Bereich von 11
- 26: Kontaktfläche von 11
- 27: abgewinkelter Bereich von 12
- 27a: abgewinkelter Bereich von 12
- 28: Kühlbohrung
- 29: Kühlbohrung
- 30: Schraubbohrung
- 31: Kontaktfläche von 12
- 32: Verbindungsabschnitt
- 33: Verbindungsabschnitt
- 34: Übergangsbereich
- 35: Übergangsbereich
- 36: Radiusbereich
- 37: Radiusbereich
- 38: Platine
- 39: Umformstation
- 40: umgeformte Platine
- 41: Lehre
- 42: Anlassvorrichtung
- 43: Traggestell
- 44: Lagergestell

- B: Bewegungsrichtung

## Patentansprüche

1. Vorrichtung zum bereichsweisen Anlassen von warmgeformten und/oder pressgehärteten Metallbauteilen (13), mit einem Traggestell (43) und einem Arbeitskopf (8), wobei der Arbeitskopf (8) zumindest ein aus einem elektrisch leitfähigen Material bestehendes Kontaktelement (11, 12) zum bereichsweisen Erwärmen eines Metallbauteils (13) mittels eines Wärmeflusses aufweist, wobei, Elektroden (15, 15a, 16, 16a) zum resistiven Heizen des Kontaktelements (11, 12) mit diesem sowie mit einer Stromquelle verbunden sind, **dadurch gekennzeichnet, dass** der Arbeitskopf (8) relativ beweglich zu dem Tragegestell (43) angeordnet ist.

2. Vorrichtung nach Anspruch 1, **dadurch gekennzeichnet, dass** das zumindest eine Kontaktelement (11, 12) mit einem elektrisch isolierenden Material beschichtet ist.

3. Vorrichtung nach Anspruch 1 oder 2, **dadurch gekennzeichnet, dass** an dem Arbeitskopf (8) zumindest zwei Kontaktelemente (11, 12) relativ zueinander beweglich angeordnet sind, so dass das Metallbauteil (13) zwischen den Kontaktelementen (11, 12) einklemmbar ist.

4. Vorrichtung nach einem der Ansprüche 1 oder 2, **dadurch gekennzeichnet, dass** an dem Arbeitskopf (8) zumindest ein Kontaktelement (11, 12) und ein thermisch und/oder elektrisch isolierendes Element relativ zueinander beweglich angeordnet sind, so dass das Metallbauteil (13) zwischen dem Kontaktelement (11, 12) und dem isolierenden Element einklemmbar ist.

5. Vorrichtung nach einem oder mehreren der Ansprüche 1 bis 4, **dadurch gekennzeichnet, dass** der Arbeitskopf (8) linear aus einer Ruheposition in eine Aktivposition beweglich angeordnet ist.

6. Vorrichtung nach einem oder mehreren der vorstehenden Ansprüche, **dadurch gekennzeichnet, dass** das Kontaktelement (11, 12) abgewinkelte Bereiche (25, 25a, 27, 27c) aufweist, an denen die Elektroden (15, 15, 16, 16a) befestigt sind.

7. Vorrichtung nach einem oder mehreren der vorstehenden Ansprüche, **dadurch gekennzeichnet, dass** das Kontaktelement (11, 12) als dem Metallbauteil (13) konturnahes Blechbauteil ausgebildet ist, so dass eine Kontaktfläche (26, 31) des Kontaktelements (11, 12) und der zu erwärmende Bereich des Metallbauteils (13) in vollflächigen Kontakt bringbar sind.

8. Vorrichtung nach einem oder mehreren der vorstehenden Ansprüche, **dadurch gekennzeichnet, dass** das Kontaktelement (11, 12) aus einem rostfreien austenitischen oder rostfreien ferritischen Stahl ausgebildet ist.

9. Verfahren zum bereichsweisen Anlassen von warmgeformten und/oder pressgehärteten Metallbauteilen (13), mit einem Traggestell (43) und einem Arbeitskopf (8), wobei zunächst ein warmgeformtes und/oder pressgehärtetes Metallbauteil (13) bereitgestellt wird, wobei zumindest ein an einem Arbeitskopf (8) angebrachtes Kontaktelement (11, 12) mittels resistiver Heizung auf eine Temperatur erwärmt wird, die größer ist als eine Zieltemperatur, auf die ein Bereich des Metallbauteils (13) erwärmt werden soll, wobei danach eine Kontaktfläche des Kontaktelements (11, 12) mit einem vorbestimmten Anpressdruck mit dem zu erwärmenden Bereich des Metallbauteils (13) vollflächig in Anlage kommt, wodurch das Metallbauteil (13) zumindest bereichsweise mittels eines Wärmeflusses auf eine Zieltemperatur erwärmt wird, dadurch gegengezeichnet , dass der Arbeitskopf (8), der relativ zu dem Traggestell angeordnet ist, zum in Kontakt bringen des Kontaktelements (11, 12) mit dem Metallbauteil (13) aus einer Ruheposition in eine Aktivposition bewegt wird.

10. Verfahren nach Anspruch 9, **dadurch gekennzeichnet, dass** das Kontaktelement (11, 12) während des Kontaktes mit dem Metallbauteil (13) nicht erwärmt wird.

11. Verfahren nach Anspruch 9 oder 10, **dadurch gekennzeichnet, dass** der Anpressdruck zwischen 100 kPa und 10 MPa, bevorzugt zwischen 100 kPa und 1 MPa liegt.

12. Verfahren nach einem oder mehreren der Ansprüche 9 bis 11, **dadurch gekennzeichnet, dass** das Metallbauteil (13) zwischen zwei an dem Arbeitskopf (8) relativ zueinander beweglich angeordneten Kontaktelementen (11, 12) eingeklemmt wird.

13. Verfahren nach einem oder mehreren der Ansprüche 9 bis 12, **dadurch gekennzeichnet, dass** das Kontaktelement (11, 12) für eine vorbestimmte Anpresszeit mit dem Metallbauteil (13) in Kontakt kommt, insbesondere zwischen 2 Sekunden und 30 Sekunden bevorzugt zwischen 3 Sekunden und 15 Sekunden.

14. Verfahren nach Anspruch einem oder mehreren der Ansprüche 9 bis 13, **dadurch gekennzeichnet, dass** das Kontaktelement (11, 12) mit oder nach dem Erreichen der Aktivposition mit dem zu erwärmenden Bereich des Metallbauteils (13) vollflächig in Anlage kommt.

15. Verfahren nach einem oder mehreren der Ansprüche 9 bis 14, **dadurch gekennzeichnet, dass** eine Vorrichtung nach einem oder mehreren der Ansprüche 1 bis 8 zur Anwendung kommt.

## Claims

1. Device for tempering sections of hot-formed and/or press-hardened metal components (13), comprising a support frame (43) and a working head (8), the working head (8) having at least one contact element (11, 12) consisting of an electrically conductive material for heating sections of a metal component (13) by means of a heat flux, electrodes (15, 15a, 16, 16a) for resistively heating the contact element (11, 12) being connected thereto and to a current source, **characterised in that** the working head (8) is arranged so as to be movable relative to the support frame (43).

2. Device according to claim 1, **characterised in that** the at least one contact element (11, 12) is coated with an electrically insulating material.

3. Device according to claim 1 or 2, **characterised in that** at least two contact elements (11, 12) are arranged on the working head (8) so as to be movable relative to one another, so that the metal component (13) can be clamped between the contact elements (11, 12).

4. Device according to one of claims 1 or 2, **characterised in that** at least one contact element (11, 12) and a thermally and/or electrically insulating element are arranged on the working head (8) so as to be movable relative to one another, so that the metal component (13) can be clamped between the contact element (11, 12) and the insulating element.

5. Device according to one or more of claims 1 to 4, **characterised in that** the working head (8) is arranged so as to be linearly movable from a rest position to an active position.

6. Device according to one or more of the preceding claims, **characterised in that** the contact element (11, 12) has angled sections (25, 25a, 27, 27c) to which the electrodes (15, 15, 16, 16a) are attached.

7. Device according to one or more of the preceding claims, **characterised in that** the contact element (11, 12) is formed as a sheet-metal component approximating the contour of the metal component (13), so that a contact surface (26, 31) of the contact element (11, 12) and the section of the metal component (13) that is to be heated can be brought into full surface contact.

8. Device according to one or more of the preceding claims, **characterised in that** the contact element (11, 12) is formed from a stainless austenitic or stainless ferritic steel.

9. Method for tempering sections of hot-formed and/or press-hardened metal components (13), with a support frame (43) and a working head (8), a hot-formed and/or press-hardened metal component (13) first being provided, at least one contact element (11, 12) attached to a working head (8) being heated by means of resistive heating to a temperature which is greater than a target temperature to which a section of the metal component (13) is to be heated, wherein thereafter a contact surface of the contact element (11, 12) comes into full surface contact with the section of the metal component (13) that is to be heated with a predetermined contact pressure, as a result of which the metal component (13) is heated at least in sections to a target temperature by means of a heat flux, **characterised in that** the working head (8), which is arranged relative to the support frame, is moved from a rest position into an active position in order to bring the contact element (11, 12) into contact with the metal component (13).

10. Method according to claim 9, **characterised in that** the contact element (11, 12) is not heated during contact with the metal component (13).

11. Method according to claim 9 or 10, **characterised in that** the contact pressure is between 100 kPa and 10 MPa, preferably between 100 kPa and 1 MPa.

12. Method according to one or more of claims 9 to 11, **characterised in that** the metal component (13) is clamped between two contact elements (11, 12) arranged on the working head (8) so as to be movable relative to one another.

13. Method according to one or more of claims 9 to 12, **characterised in that** the contact element (11, 12) comes into contact with the metal component (13) for a predetermined contact pressure time, in particular between 2 seconds and 30 seconds, preferably between 3 seconds and 15 seconds.

14. Method according to one or more of claims 9 to 13, **characterised in that** the contact element (11, 12) comes into full surface contact with the section of the metal component (13) that is to be heated upon or after reaching the active position.

15. Method according to one or more of claims 9 to 14, **characterised in that** a device according to one or more of claims 1 to 8 is used.

## Revendications

1. Dispositif pour le revenu par zones de composants métalliques (13) formés à chaud et/ou durcis à la presse, avec un châssis porteur (43) et une tête de travail (8), dans lequel la tête de travail (8) présente au moins un élément de contact (11, 12) constitué d'un matériau électroconducteur pour chauffer par zones un composant métallique (13) au moyen d'un flux thermique, dans lequel des électrodes (15, 15a, 16, 16a) pour chauffer par résistance l'élément de contact (11, 12) sont connectées à celui-ci ainsi qu'à une source de courant, **caractérisé en ce que** la tête de travail (8) est disposée de manière mobile par rapport au châssis porteur (43).

2. Dispositif selon la revendication 1, **caractérisé en ce que** l'au moins un élément de contact (11, 12) est revêtu d'un matériau électro-isolant.

3. Dispositif selon la revendication 1 ou 2, **caractérisé en ce qu'**au moins deux éléments de contact (11, 12) sont disposés sur la tête de travail (8) de manière mobile l'un par rapport à l'autre, de sorte que le composant métallique (13) peut être coincé entre les éléments de contact (11, 12).

4. Dispositif selon l'une quelconque des revendications 1 ou 2, **caractérisé en ce qu'**au moins un élément de contact (11, 12) et un élément à isolation thermique et/ou électro-isolant sont disposés sur la tête de travail (8) de manière mobile l'un par rapport à l'autre, de sorte que le composant métallique (13) peut être coincé entre l'élément de contact (11, 12) et l'élément isolant.

5. Appareil selon une ou plusieurs des revendications 1 à 4, **caractérisé en ce que** la tête de travail (8) est disposée linéairement de manière mobile d'une position de repos à une position active.

6. Dispositif selon une ou plusieurs des revendications précédentes, **caractérisé en ce que** l'élément de contact (11, 12) présente des zones coudées (25, 25a, 27, 27c) auxquelles les électrodes (15, 15, 16, 16a) sont fixées.

7. Dispositif selon une ou plusieurs des revendications précédentes, **caractérisé en ce que** l'élément de contact (11, 12) est réalisé en tant que composant de tôle proche du contour du composant métallique (13), de sorte qu'une surface de contact (26, 31) de l'élément de contact (11, 12) et la zone à chauffer du composant métallique (13) peuvent être mises en contact sur toute la surface.

8. Dispositif selon une ou plusieurs des revendications précédentes, **caractérisé en ce que** l'élément de contact (11, 12) est réalisé avec un acier austénitique inoxydable ou ferritique inoxydable.

9. Procédé pour le revenu par zones de composants métalliques (13) formés à chaud et/ou durcis à la presse, avec un châssis porteur (43) et une tête de travail (8), dans lequel un composant métallique (13) formé à chaud et/ou durci à la presse est d'abord prévu, dans lequel au moins un élément de contact (11, 12) fixé à une tête de travail (8) est chauffé au moyen d'un chauffage par résistance à une température qui est supérieure à une température de consigne à laquelle une zone du composant métallique (13) doit être chauffée, dans lequel, une surface de contact de l'élément de contact (11, 12) vient ensuite en contact sur toute la surface avec la zone du composant métallique (13) à chauffer au moyen d'une pression de contact prédéterminée, ce qui fait que le composant métallique (13) est chauffé à une température cible au moins par zones au moyen d'un flux thermique, **caractérisé en ce que** la tête de travail (8), qui est disposée par rapport au châssis porteur, est déplacée d'une position de repos à une position active pour amener l'élément de contact (11, 12) en contact avec le composant métallique (13).

10. Procédé selon la revendication 9, **caractérisé en ce que** l'élément de contact (11, 12) n'est pas chauffé pendant le contact avec le composant métallique (13).

11. Procédé selon la revendication 9 ou 10, **caractérisé en ce que** la pression de contact est comprise entre 100 kPa et 10 MPa, de préférence entre 100 kPa et 1 MPa.

12. Procédé selon une ou plusieurs des revendications 9 à 11, **caractérisé en ce que** le composant métallique (13) est coincé entre deux éléments de contact (11, 12) disposés sur la tête de travail (8) de manière mobile l'un par rapport à l'autre.

13. Procédé selon une ou plusieurs des revendications 9 à 12, **caractérisé en ce que** l'élément de contact (11, 12) vient en contact avec le composant métallique (13) pendant un temps de pression de contact prédéterminé, en particulier entre 2 secondes et 30 secondes, de préférence entre 3 secondes et 15 secondes.

14. Procédé selon une ou plusieurs des revendications 9 à 13, **caractérisé en ce que** l'élément de contact (11, 12) vient en contact sur toute la surface avec la zone du composant métallique (13) à chauffer à l'atteinte ou après l'atteinte de la position active.

15. Procédé selon une ou plusieurs des revendications 9 à 14, **caractérisé en ce qu'**un dispositif est utilisé selon l'une quelconque ou plusieurs des revendications 1 à 8.
